# DEMANDE DE BREVET EUROPEEN

(11) **EP 1 352 787 A1**
(43) Date de publication de la demande: **15.10.2003**
(21) Numéro de dépôt: 03370015.4
(22) Date de dépôt: 04.04.2003
(51) Int. Cl.: B60R 13/10, G09F 7/00, B41J 2/44

(54) **Procédé combinant l'impression laser d'un film souple, puis son assemblage bord à bord avec une plaque transparente adhésive de dimensions et formes identiques**

(30) Priorité: 05.04.2002 FR 0204226
(71) Demandeur: Bridoux, Eric, 62200 Carvin (FR); Charbonnier, Denis, 62580 Neuville St. Vaast (FR)
(72) Inventeur: Bridoux, Eric, 62200 Carvin (FR); Charbonnier, Denis, 62580 Neuville St. Vaast (FR)
(74) Mandataire: Hietter, Laurent

(57) **Abrégé**

L'invention concerne un procédé combinant l'impression d'un film souple (1) préalablement pré-découpé, le calage de ce film souple imprimé par rapport à une plaque transparente (2) adhésive de dimensions et formes sensiblement identiques à ce dernier, un premier collage (14) sur une petite surface de ces deux éléments en respectant leurs calages mutuels, puis leur assemblage bords à bords sur toute leur surface par calandrage.

Le procédé est principalement constitué d'une imprimante laser (4), de cales, de butées, d'éléments séparateurs (8) et d'une calandre composée de deux cylindres (11) de façon à faciliter les calages et manipulations du film souple (1) et de la plaque transparente (2) adhésive lors de leur assemblage.

Le dispositif selon l'invention est plus particulièrement destiné à la fabrication de plaques minéralogiques et de plaques de rues.

## Description

La présente invention concerne un procédé de fabrication combinant l'impression d'un film souple préalablement pré-découpé, le calage de ce film souple imprimé par rapport à une plaque transparente adhésive de dimensions et formes sensiblement identiques à ce dernier, le collage sur une petite surface de ces deux éléments en respectant leurs calages mutuels, puis leur assemblage bords à bords sur toute leur surface par calandrage.

Dans l'état actuel de la technique, pour la réalisation de plaques d'identification ou encore d'immatriculation pour les automobiles comportant un texte, un motif, ou des chiffres visibles à travers une plaque transparente et/ou protectrice, on utilise une méthode qui consiste à assembler manuellement les textes, motifs ou chiffres en sandwich entre un fond coloré ou rétro-réfléchissant et la face transparente.

Le positionnement de ces différents textes, motifs ou chiffres, n'est pas aisé et nécessite une main d'oeuvre spécialisée. Toutes ces opérations manuelles engendrent des rebuts de fabrication et des pertes de temps.

De plus, le collage d'un film souple sur une plaque adhésive n'est pas aisé. En effet, le film doit être rapporté sur la plaque avec beaucoup de précautions pour éviter d'emprisonner des bulles d'air entre les deux matériaux. La solution la plus classique consiste à venir presser le film sur la plaque adhésive entre les deux rouleaux d'une calandre.

Par contre, cette solution ne permet pas un positionnement précis du film, qui est souvent conditionné en bobine, par rapport à la plaque.

Dans ce dernier cas, la découpe du film souple est réalisé après son collage sur une plaque transparente, ou bien une association de films souples transparents formant une plaque, et il est nécessaire d'inclure dans le procédé un dispositif de découpe précis et onéreux. De plus, si l'on souhaite obtenir un produit fini avec des angles arrondis, le procédé de découpe devient complexe car il doit également séparer les chutes du produit fini.

Lorsque le film et la plaque adhésive sont préalablement pré-découpés, la manipulation est encore plus hasardeuse car quatre actions doivent est réalisées :
- le film et la plaque adhésive doivent être superposés, sans contact entre eux, de façon précise,
- tout en respectant le calage précédent, un bord du film doit être mis en contact avec un bord de la plaque adhésive,
- la jonction partielle ainsi réalisée doit être introduite entre les deux cylindres d'une calandre,
- la rotation des cylindres vient rapporter le film sur la plaque adhésive tout en évitant le contact du film sur la plaque avant leur jonction dans la calandre.

Ces actions sont généralement réalisées manuellement et demandent une grande dextérité.

Une autre technique propose d'utiliser une imprimante transfert thermique pour imprimer directement les textes, motifs ou chiffres sur le film souple, puis, à l'aide de différents systèmes de butées, de positionner le film souple par rapport à une plaque transparente adhésive avant d'assembler ces deux derniers par collage à l'aide d'une calandre.

Cette technique engendre de nombreuses contraintes intrasèques au procédé d'impression par transfert thermique.

En effet :
a - Le consommable des imprimantes transfert thermique est un film transfert, d'une épaisseur généralement inférieure à 10 microns, qui supporte très mal les moindres contraintes mécaniques. Ces dernières, qui se concrétisent par des plis ou un déchirement, sont la source de nombreux défauts d'impression.
b - Le film transfert est conditionné en bobine qu'il est hasardeux de changer et dont la manipulation requière une grande habitude et dextérité.
c - Qui plus est, et pour éviter un encombrement trop important, les bobines de film thermique ont généralement une longueur de 200 à 300 mètres ce qui implique de fréquents changements de bobines,
d - Le procédé d'impression par transfert thermique, qui utilise une tête d'impression en céramique rigide fragile à la poussière, est très difficile à changer.
e - Le prix des imprimantes transfert thermique augmente de façon très conséquente pour des largeurs d'impression supérieures à 4 pouces (soit 101,6 mm), ce qui limite fortement le domaine d'application.

L'état actuel de la technique fait ressortir un problème qui, malgré des contraintes qui existent depuis des années, n'a pas été résolu à ce jour et dont la solution n'est pas évidente pour l'homme du métier.

La présente invention se propose de simplifier les diverses opérations par une nouvelle combinaison de moyens suivants :

Le procédé selon l'invention, qui permet l'impression d'un film souple préalablement pré-découpé, le calage du film imprimé par rapport à une plaque transparente recouverte d'un adhésif sur une de ses faces et de dimensions et formes sensiblement identiques au film, puis le collage bord à bord de ces deux éléments se caractérise par combinaison nouvelle des moyens suivantes :
- Le procédé comprend une imprimante laser.
- Le film souple imprimé par l'imprimante vient se positionner directement en sortie de l'imprimante contre des butées du procédé.
- Le procédé comprend des élément séparateurs maintient hors contact le film souple imprimé et la plaque transparente adhésive.
- Le procédé comprend des butées permettant de positionner la plaque par rapport au film souple imprimé.
- La géométrie du procédé permet un premier collage, par contact d'un bord du film sur le bord correspondant de la plaque, grâce à un mouvement de la plaque par rapport au film issu d'une force extérieure à ces deux éléments.
- Le procédé comprend une calandrage, constituée de deux cylindres mous et tournants, destinés à presser le film souple imprimé sur la plaque transparente adhésive en débutant par le bord du premier collage pour fixer bords à bords ces derniers.

Grâce au procédé selon l'invention, on peut réaliser l'impression d'un film souple, le calage de ce film par rapport à une plaque transparente, puis leur collage bord à bord de façon simple et rapide.

L'utilisation d'une imprimante laser, selon l'invention, permet en effet de résoudre les contraintes suivantes :
a - L'imprimante laser ne comporte pas de film d'impression et, par là même, n'est pas sujette aux contraintes liées à ce dernier,
b - Le consommable d'une imprimante laser est constitué d'un toner conditionné sous forme de cassette et dont l'usage est aisé et connu,
c - Le volume standard du toner d'une imprimante laser permet une autonomie de 2 à 3 fois supérieure à celle d'une imprimante transfert thermique,
d - Dans le cas où des poussières viendraient à détériorer la partie de l'imprimante en contact avec le film souple, il est également très facile de remplacer l'élément détérioré qui est, lui aussi, partie intégrante d'une cassette,
e - Les imprimantes laser ayant généralement une largeur d'impression de 210 mm, il est ainsi possible, à budget équivalent, d'imprimer une largeur 2 fois supérieure à celle des imprimantes transfert thermiques.

L'utilisateur du procédé selon l'invention aura la possibilité d'imprimer facilement une plus grande largeur d'impression à moindre coût tout en réduisant de façon conséquente les frais de maintenance.

De plus, le procédé ne comprend que des éléments fiables et de faibles coûts.

Selon des modes particuliers de réalisations :
- la butée du film souple imprimé peut être l'un des cylindres de la calandre.
- le film souple imprimé peut venir en butée radialement sur l'un des cylindres de la calandre.
- les éléments séparateurs peuvent être constitués de plusieurs galets tournant librement.
- la plaque transparente adhésive peut venir en appui, sur sa face adhésive, par gravitation contre les éléments séparateurs.
- la butée de la plaque transparente adhésive peut être l'un des cylindres de la calandre.
- la plaque transparente adhésive peut venir par gravitation en appui sur l'un des cylindres de la calandre.
- le mouvement de la plaque transparente par rapport au film souple imprimé pour réaliser un premier collage sur un bord peut être un mouvement de rotation de la plaque transparente autour d'un axe normal à son bord le plus grand.
- le mouvement de la plaque transparente par rapport au film souple imprimé pour réaliser un premier collage sur un bord peut être un mouvement de rotation de la plaque transparente autour d'un des éléments séparateurs.
- le mouvement de la plaque transparente par rapport au film souple imprimé pour réaliser un premier collage sur un bord peut être une flexion de la plaque transparente.
- le mouvement de la plaque transparente par rapport au film souple imprimé pour réaliser un premier collage sur un bord peut être issue d'une force manuelle.
- le support du film souple imprimé peut être flexible à l'endroit où le film souple vient en contact avec la plaque transparente adhésive lors du premier collage sur un bord.
- le support du film souple imprimé peut être chanfreiné à l'endroit où le film souple vient en contact avec la plaque transparente adhésive lors du premier collage sur un bord.
- la rotation d'un des cylindres de la calandre peut entraîner directement par frottement dans la calandre le film souple et la plaque transparente après leur premier collage.
- les éléments séparateurs peuvent être anti-adhérents.
- le film souple peut être un film rétro-réfléchissant.

Dans une configuration privilégiée du procédé :
- Le calage du film souple et de la plaque transparente peut se faire sur un même coté privilégié de façon à pouvoir utiliser des formats de largeurs différentes.
- La butée du film souple et la butée de la plaque transparente peuvent être le cylindre inférieur de la calandre.

Les dessins annexés illustrent l'invention :

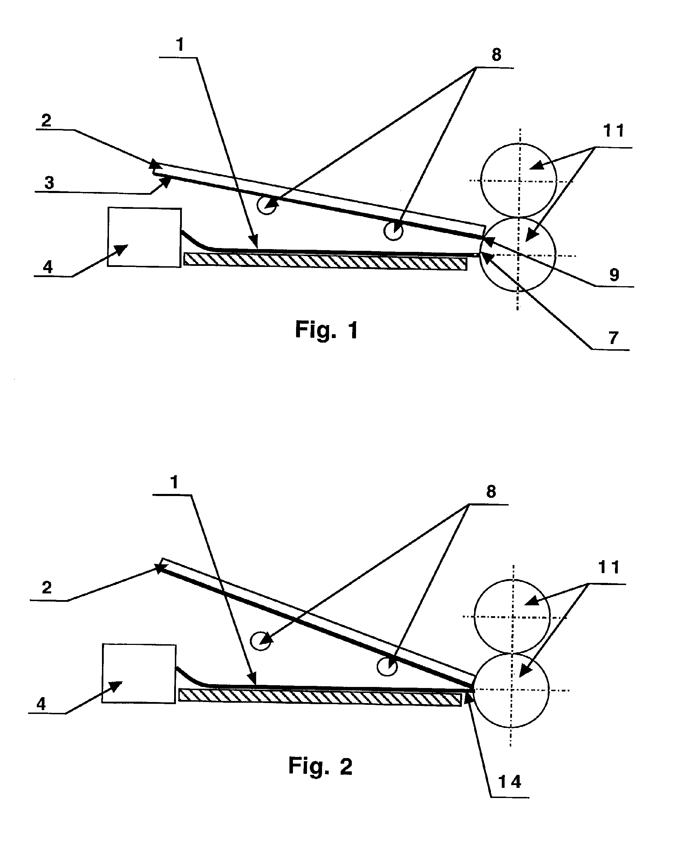

- La figure n° 1 représente en coupe le procédé après l'impression du film souple (1) et la mise en place de la plaque transparente (2).
   Le film souple (1), qui vient d'être imprimé par l'imprimante (4), est en appui sur l'un des cylindres (11) qui constitue sa butée (7).
   La plaque transparente (2), dont sa face recouverte de l'adhésif (3) est en contact avec les éléments séparateurs (8), est en butée sur l'un des cylindres (11) qui constitue sa butée (9).
- La figure n° 2 représente en coupe le procédé à la fin du mouvement visant à créer un premier collage (14) entre le film souple (1) et la plaque transparente (2).
   La plaque transparente (2) a subi un mouvement de pivotement sur un des éléments séparateurs (8) pour venir en contact avec le bord du film souple (1) et, par la même, réaliser un premier collage (14) avec ce dernier sur son bord.

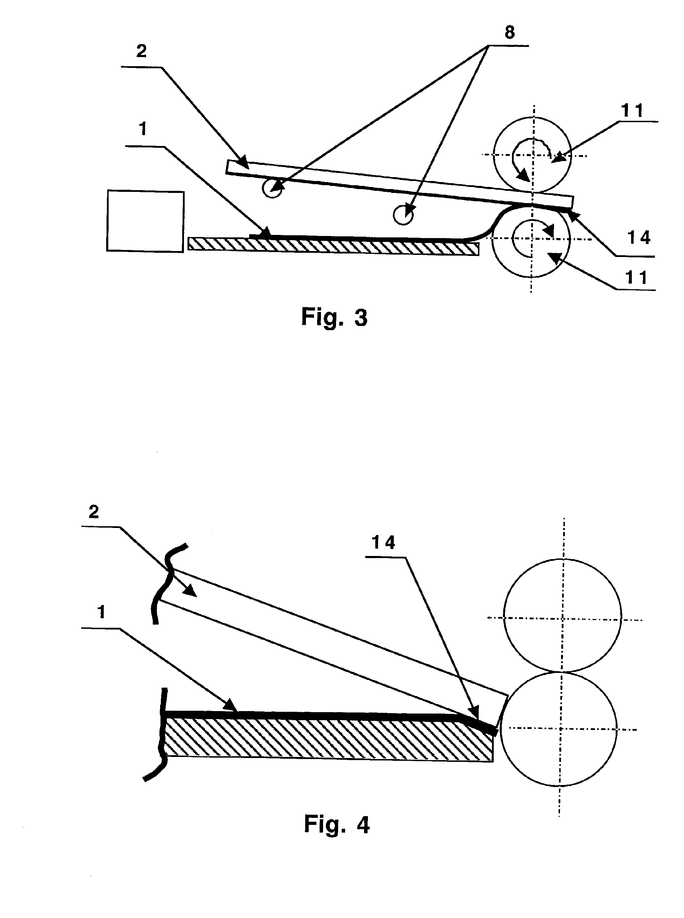

- La figure n° 3 représente une coupe du procédé lors de l'introduction du film souple (1) et de la plaque transparente (2) entre les cylindres (11) de la calandre après leur premier collage (14) entre eux.
   Le calandrage a été amorcé en zone de premier collage (14), ce qui a permis de maintenir parfaitement le positionnement du film souple (1) par rapport à la plaque transparente (2).
- La figure n° 4 représente en coupe le détail d'un support de film souple (1) qui est chanfreiné de façon à augmenter la surface de contact entre le film souple (1) et la plaque transparente (2) lors du premier collage (14).

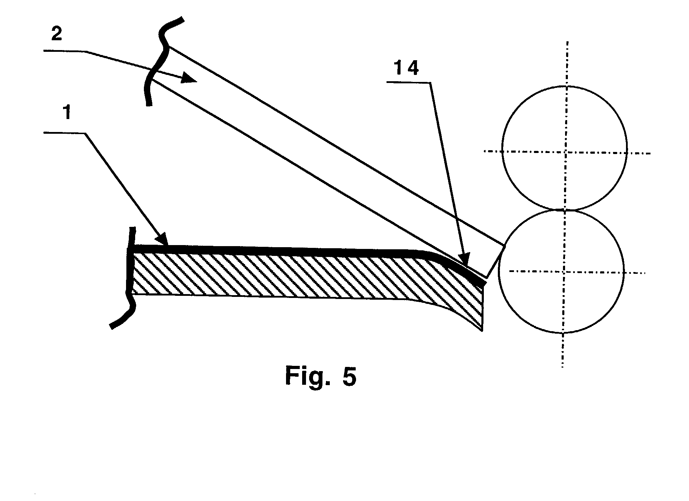

   La figure n° 5 représente en coupe le détail d'un support de film souple (1) qui est plié, en déformation plastique sous l'action de la plaque transparente (2), de façon à augmenter la surface de contact entre le film souple (1) et la plaque transparente (2) lors du premier collage (14).

A titre d'exemple non limitatif, le film et la plaque auront une dimension de 520 x 110 mm, le film souple sera un film rétro-réflechissant et la plaque transparente sera en PMMA d'une épaisseur de 3 mm.

Le procédé selon l'invention est plus particulièrement destiné, de façon non limitative, à la fabrication de plaques minéralogiques et de plaques de rues.'

## Revendications

1. Procédé de fabrication de plaques d'identification comprenant l'impression d'un film souple préalablement pré-découpé, le calage du dit film sur une plaque transparente (2) recouverte d'un adhésif (3) sur une de ses faces, de dimensions et formes sensiblement identiques audit film, et le collage bord à bord de ces deux éléments **caractérisé par** combinaison des étapes,
- d'impression du film souple par une imprimante laser (4),
- de positionnement, par avancée en sortie de l'imprimante (4), du dit film souple imprimé (1) contre des butées (7),
- du maintient hors contact, par des élément séparateurs (8), de ladite plaque avec le dit film,
- de positionnement en butée (9) de ladite plaque par rapport au dit film,
- d'un premier collage (14) par contact d'un bord du dit film sur le bord correspondant de ladite plaque par un mouvement, du dit film par rapport à ladite plaque, issu d'une force extérieure à ces deux éléments,
- de calandrage desdits film et plaque, entre deux cylindres (11) mous et tournants, en débutant par le bord du premier collage (14) pour fixer bords à bords ces derniers.

2. Procédé selon la revendication précédente **caractérisé en ce que** la butée (7) du film souple (1) imprimé est l'un des cylindres (11) de la calandre.

3. Procédé selon l'une des revendications précédentes **caractérisé en ce** le film souple (1) imprimé vient en butée radialement sur l'un des cylindres (11) de la calandre.

4. Procédé selon l'une des revendications précédentes **caractérisé en ce que** les éléments séparateurs (8) sont constitués de plusieurs galets tournant librement.

5. Procédé selon l'une des revendications précédentes **caractérisé en ce que** la plaque transparente (2) adhésive vienne en appui, sur sa face adhésive, par gravitation contre les éléments séparateurs (8).

6. Procédé selon l'une des revendications précédentes **caractérisé en ce que** la butée (9) de la plaque transparente (2) adhésive est l'un des cylindres (11) de la calandre.

7. Procédé selon les deux revendications précédentes **caractérisé en ce que** la plaque transparente (2) adhésive vienne par gravitation en appui sur l'un des cylindres (11) de la calandre.

8. Procédé selon l'une des revendications précédentes **caractérisé en ce que** le mouvement de la plaque transparente (2) par rapport au film souple (1) imprimé pour réaliser un premier collage (14) sur un bord est un mouvement de rotation de la plaque transparente (2) autour d'un axe normal à son bord le plus grand.

9. Procédé selon l'une des revendications précédentes **caractérisé en ce que** le mouvement de la plaque transparente (2) par rapport au film souple (1) imprimé pour réaliser un premier collage (14) sur un bord est un mouvement de rotation de la plaque transparente (2) autour d'un des éléments séparateurs (8).

10. Procédé selon l'une des revendications 1 à 7 **caractérisé en ce que** le mouvement de la plaque transparente (2) par rapport au film souple (1) imprimé pour réaliser un premier collage (14) sur un bord est une flexion de la plaque transparente (2).

11. Procédé selon l'une des revendications précédentes **caractérisé en ce que** le mouvement de la plaque transparente (2) par rapport au film souple (1) imprimé pour réaliser un premier collage (14) sur un bord est issue d'une force manuelle.

12. Procédé selon l'une des revendications précédentes **caractérisé en ce que** le support du film souple (1) imprimé est flexible à l'endroit où le film souple (1) vient en contact avec la plaque transparente (2) adhésive lors du premier collage (14) sur un bord.

13. Procédé selon l'une des revendications précédentes **caractérisé en ce que** le support du film souple (1) imprimé est chanfreiné à l'endroit où le film souple (1) vient en contact avec la plaque transparente (2) adhésive lors du premier collage (14) sur un bord.

14. Procédé selon l'une des revendications précédentes **caractérisé en ce que** la rotation d'un des cylindres (11) de la calandre entraîne directement par frottement dans la calandre le film souple (1) et la plaque transparente (2) après leur premier collage (14).

15. Procédé selon l'une des revendications précédentes **caractérisé en ce que** les éléments séparateurs (8) sont anti-adhérents.

16. Procédé selon l'une des revendications précédentes **caractérisé en ce que** le film souple (1) est un film rétro-réfléchissant.
